# EUROPÄISCHE PATENTSCHRIFT

(11) **EP 1 366 791 B1**
(45) Veröffentlichungstag und Bekanntmachung des Hinweises auf die Patenterteilung: **26.03.2008**
(21) Anmeldenummer: 02011827.9
(22) Anmeldetag: 28.05.2002
(51) Int. Cl.: B01D 39/16

(54) **Filtermedium**
Filter material
Matériau filtrant

(43) Veröffentlichungstag der Anmeldung: 03.12.2003
(73) Patentinhaber: Hollingsworth & Vose GmbH, 35116 Hatzfeld/Eder (DE)
(72) Erfinder: Heinz, Beate Dr., 35116 Hatzfeld-Reddighausen (DE); Schnieders, Immo, 35116 Hatzfeld-Holzhausen (DE)
(74) Vertreter: Olbricht, Karl Heinrich

(56) Entgegenhaltungen:
- EP-A- 0 316 195
- WO-A-02/20134
- DE-U- 29 907 699
- US-A- 6 165 572

## Beschreibung

Die Erfindung betrifft ein Filtermedium zur Verwendung in durchströmbaren Vorrichtungen gemäß dem Oberbegriff von Anspruch 1, sowie ein Verfahren zur Herstellung eines solchen Filtermediums gemäß dem Oberbegriff von Anspruch 23.

Filtermedien finden vielfältige Verwendung, wenn es um die Abscheidung von Partikeln aus einem Luft- oder Gasstrom, um das Abtrennen von fester Materie aus einer Fest-Flüssig-Phase oder um das Aufrechterhalten einer bestimmten Konzentration geht. Sie werden beispielsweise in Form von Faltenfiltem aus Zellstoff im Laboratorium genauso eingesetzt, wie als Flächenfilter in Ventilationssystemen, wie sie z. B. im Automobil vorhanden sind.

Dabei nehmen die Anforderungen an die Filterleistung stets zu. Insbesondere sollen immer kleinere Partikel sowie immer breitere Korngrößenverteilungen wirksam abgefiltert und dabei gleichzeitig das Staubaufnahme-Vermögen gesteigert werden. Diesen Performance-Ansprüchen genügen Filter aus einer einzelnen, dünnen Vlieslage z. B. aus Zellstoff-Fasern nicht. Eine dickere Ausführung derartiger Filter wäre kostenintensiv. Außerdem würden sich die Betriebskosten des Filters erhöhen, da eine gleichartige Durchströmung eines dickeren Filtermediums nur mit höherem Druck erreicht werden kann.

Donaldson ist dieses Problem mit der Einführung eines aus mehreren Lagen bestehenden Filtermediums angegangen (Datenblatt 08.04.1998). Auf einem Polyester-Faservlies wird eine 1 µm bis 20 µm dicke Effizienzschicht aus organischen Polymerfasern mit Faserdurchmessem zwischen 150 nm und 200 nm aufgebracht, wobei als Fasermaterial vorzugsweise Polyacrylnitril, Polyvinylidenchlorid oder Polycarbonat verwendet wird. Mit einem solchen Filtermedium soll es gelingen, Teilchen mit einer Größe von 0,5 µm aber auch größere Partikel zu über 90 % zurückzuhalten, wobei keine Angaben darüber gemacht werden, wie rasch ein solches Filtermedium verstopft. In DE-U1-299 07 699 werden Filtermedien mit ähnlichen Eigenschaften beschrieben.

In der WO 02 20 134 von Donaldson werden Filtermedien beschrieben, die aus wenigstens einer Materiallage und aus wenigstens einer Feinstrukturlage bestehen. Als Materiallage wird beispielsweise ein konventionelles Zellulose Luftfiltermedium eingesetzt. Die Feinstrukturlage umfaßt ein Copolymer bestehend aus Nylon 6, Nylon 66 und Nylon 610 und dem Nylon Copolymerharz SVP 651. In einer anderen Ausführungsform besteht die Feinstrukturlage aus dem genannten Copolymer und aus Oligomeren von Paratertbutylphenol. In einer noch anderen Bauform umfasst die Feinstrukturlage Fasern aus mit Polyacrylsäure vernetztem Polyvinylalkohol.

Um derartigen Filtermedien und solchen, die als Trägermateriallage fast ausschließlich Zellstoff-Fasern verwenden, eine ausreichende Stabilität und bei Bedarf einen chemikalienresistenten und robusten Charakter zu verleihen, müßten die Fasern mit reaktiven Harzen oder Harzmischungen, beispielsweise Phenolharzen, imprägniert und das Filter bei Temperaturen oberhalb 150 °C thermisch ausgehärtet werden. Die beschriebenen Filtermedien halten einer solchen thermischen Behandlung jedoch nicht stand, weil die Effizienzschicht bei höheren Temperaturen, z.B. oberhalb 150 °C, nahezu vollständig zerstört wird. Die gewünschte Filterwirkung geht verloren. Die gleiche Problematik entsteht, wenn die bekannten Filtermedien unter extremen Umweltbedingungen eingesetzt werden, insbesondere bei hohen Temperaturen und in aggressiven Atmosphären oder Lösungen.

Aufgabe der Erfindung ist es, diese und weitere Nachteile des Standes der Technik mit einfachen Mitteln zu überwinden und ein verbessertes Filtermedium zu schaffen, das unter extremen Umwelt- bzw. Betriebsbedingungen einsetzbar ist und eine dauerhaft hohe Filterleistung aufweist. Es soll in großer Stückzahl kostengünstig und umweltfreundlich herstellbar sein. Angestrebt wird ferner eine hohe Staubaufnahmekapazität, wobei das Filtermedium bei relativ geringer Gesamtdicke eine ausreichende Stabilität aufweisen soll

Hauptmerkmale der Erfindung sind im kennzeichnenden Teil der Ansprüche 1 und 23 angegeben. Ausgestaltungen sind Gegenstand der Ansprüche 2 bis 22 und 24 bis 28.

Bei einem Filtermedium zur Verwendung in durchströmbaren Vorrichtungen, mit wenigstens einer Materiallage und mit wenigstens einer auf der Materiallage permanenthaftend aufgebrachten Feinstrukturlage bestehend aus elektrostatisch versponnenen Polymerfasern mit einem durchschnittlichen Faserdurchmesser kleiner und/oder gleich 1 µm, wobei die Polymerfasern über ein Vernetzungsmittel (cross-linker) miteinander vernetzt sind, und die Vernetzung der Polymerfasern unter Einwirkung eines Katalysators oder elektromagnetischer- bzw. Elektronenstahlen erhalten wird, sieht die Erfindung vor, daß die Materiallage mit einem Imprägnierungsmittel imprägniert und verfestigt oder verfestigbar ist und die vernetzten Polymerfasern bis 180 °C temperaturstabil sind.

Versuche haben gezeigt, daß mit einer solchen Filterstruktur eine ausgezeichnete Abfilterung eines großen Partikelgrößen-Querschnitts erreicht wird. Die Fähigkeit, Teilchen kleiner 300 nm abzufiltern, bleibt selbst bei hohen Temperaturen, in verschiedensten Flüssigkeits- und Gasströmen sowie in chemisch aggressiven Umgebungen und bei hohen Drücken erhalten. Dies war vor dem Hintergrund der bereits existierenden Filtermedien nicht zu erwarten.

Derartige Filtermedien, auch wenn die Materiallage aus Zellstoff-Synthesefaser-Mischgewebe gefertigt ist, sind in Wasser unlöslich und können deshalb in fluiden insbesondere wässrigen Umgebungen hervorragend eingesetzt werden.

In einer Unterkombination umfasst das Filtermedium vernetzte Polymerfasern, die bis 200 °C temperaturstabil sind. Nach einem weiteren Aspekt der Erfindung können auch Polymerfasern verwendet werden, die unvernetzte bis 200 °C temperaturstabil sind. Auch hier hat sich überraschend gezeigt, daß die Feinstrukturlage selbst unter extremen Bedingungen nicht zerstört wird, d.h. die Filterwirkung bleibt voll erhalten. Ein Vernetzen ist in vorteilhafter Weise möglich.

Die Polymerfasern der Feinstrukturlage sind auf wenigstens einer der Materiallagen permanent selbsthaftend aufgebracht und verlangen daher kein zusätzliches Vernetzungsmittel. Sie bestehen insbesondere aus Polyvinylalkohol, Polyacrylsäure, Polyacrylamid, Polyamid, Polyvinylamin, Polyvinylformamid oder aus hieraus gebildeten Copolymeren, also aus in polaren Lösemitteln löslichen Polymeren. Dadurch wird ein äußerst umweltschonender Produktionsprozeß gewährleistet.

Die Polymerfasern können innerhalb der Feinstrukturlage unterschiedliche Durchmesser aufweisen, wobei die Faserlage eine Vorzugsrichtung hat. Entlang dieser sind die Polymerfasern der Größe nach geordnet, so daß innerhalb des Filtermediums eine Gradientenstruktur entsteht. Die Filtereigenschaften des Filtermediums können hierdurch nochmals gesteigert werden, bei gleichzeitiger Reduzierung der Gesamtdicke.

Das Vernetzungsmittel zur Verbindung der Polymerfasern untereinander und/oder mit zumindest einer Materiallage ist eine wenigstens bifunktionelle chemische Verbindung, vorzugsweise ein Phenolharz, ein Melaminformaldehydharz, ein Harnstoff-Formaldehyd-Harz, ein Epoxidharz, ein Acrylharz, ein Naßfestmittel oder eine Mischung der genannten Substanzen. Diese Vernetzungsmittel sorgen im Zusammenwirken mit dem Katalysator für eine gute Vemetzung der Polymerfasern im Raum. Dadurch entsteht eine außergewöhnlich stabile Feinstrukturlage, die unerläßlich für ein Filtermedium ist. Dieses zeigt auch bei starker und andauernder chemischer, thermischer und mechanischer Beanspruchung eine dauerhaft gute Filterleistung.

Die Verwendung von Katalysatoren, wie Lewis- oder Brönsted-Säuren, Lewis- oder Brönsted-Basen oder eine Verbindung mit Oxidations- oder Radikalstarter-Eigenschaften beschleunigen den Vernetzungsprozeß. Wird die Vernetzung durch Energiezufuhr in Form von Wärme, Ultraschall, elektromagnetischer Strahlung, vorzugsweise IR- oder UV-Licht oder durch Elektronenstrahlen bewirkt, können überdies gegebenenfalls entstehende Katalysator-Rückstände im Filtermedium vermieden werden. Außerdem sind mit UV-Licht bestrahlte Vernetzerlösungen lange verarbeitbar.

In einer günstigen Weiterentwicklung ist im Filtermedium wenigstens eine weitere Materiallage vorgesehen, die eine Deckschicht, eine Stützfaserlage oder eine weitere Filterschicht ist oder bildet, wobei die Feinstrukturlage an wenigstens eine dieser Schichten an und/oder abströmseitig angrenzt.

Insgesamt bleibt das makroskopisch meßbare Volumen der Materiallage nach dem Aufbringen der Polymerfasern der Feinstrukturlage unverändert. Das erfindungsgemäße Filtermedium benötigt daher im Gegensatz zu herkömmlichen Filtermedien - trotz erhöhter Filterleistung - keinen zusätzlichen Platz.

Zweckmäßig besteht wenigstens eine Materiallage aus organischen und/oder anorganischen Fasern oder einer Komposit-Verbindung daraus, insbesondere aus Zellstoff, synthetischen Fasern oder Mikroglasfasern. Diese Faserstoffe haben einen angemessenen Preis und vorteilhafte mechanische Eigenschaften. Letztere werden noch verbessert, wenn wenigstens eine Materiallage imprägniert und verfestigt oder verfestigbar ist, beispielsweise mit einem Phenolharz. Dadurch besitzt das gesamte Filtermedium auch in aggressiven Umgebungen dauerhaft gute Filtereigenschaften und eine hohe Formstabilität.

In einer noch anderen Ausführungsform der Erfindung besteht zumindest eine Materiallage aus einem großporigen Basismedium mit geringer Filterwirkung oder aus einer offenporigen Verbindungslage ohne Filtereigenschaften. Diese preisgünstige Bauform ermöglicht es, nicht verbindbare Filterlagen aneinander zu binden und die Staubaufnahmekapazität des Filtermediums deutlich zu steigern. In einer weiteren Bauform ist jedenfalls eine Materiallage ein Elektretmedium, dessen Filterleistung durch die Feinstrukturlage ebenfalls gesteigert und außerdem zeitkonstant beibehalten wird.

Ist wenigstens eine Materiallage des Filtermediums oberflächenhydrophob, beispielsweise durch Alkylierung oder Silylierung (Silanisierung) und/oder enthält sie ein oder mehrere Flammschutzmittel und/oder Fluoreszenzfarbstoffe, wird ein festes Anhaften von Filtraten wirksam verhindert. Die Qualität des Filtermediums kann kontrolliert werden. Weiterhin vorgesehene Affinitätsliganden machen das Filtermedium auch unter drastischen Betriebsbedingungen teilchenselektiv.

Zur Steigerung der Filterleistung bildet wenigstens ein besser jedoch mehrere Filtermedien zusammen ein Partikel oder Molekülfilter.

Bei einem Verfahren zur Herstellung eines Filtermediums zur Verwendung in durchströmbaren Vorrichtungen, bei welchem wenigstens ein Polymer in geschmolzenem Zustand oder in einem polaren oder unpolaren Lösemittel gelöst mittels einer Düse in einem elektrischen Feld zu Polymerfasern versponnen wird, welche auf einer Materiallage in Form einer Feinstrukturlage abgelegt werden, wobei die Polymerfasern einen durchschnittlichen Faserdurchmesser kleiner und/oder gleich 1 µm aufweisen und wobei zwischen den Polymerfasern Zwischenräume ausgebildet sind, wird der Polymer-Schmelze bzw. der Polymer-Lösung ein Vernetzungsmittel zugesetzt und die auf der Materiallage abgelegten Polymerfasern vernetzen mit dem Vernetzungsmittel unter Vermittlung eines Katalysators oder elektromagnetischer- bzw. Elektronenstahlen bzw. werden mit ihm vernetzt. Die Erfindung sieht hier vor, daß die Materiallage mit einem Imprägniermittel imprägniert wird und daß die Feinstrukturlage bis 180 °C vollständig erhalten bleibt.

Mit einem solchen Verfahren lassen sich Fasern kleiner 1 µm schnell und präzise herstellen und je nach Kundenwunsch oder Reaktivität zu einem vorbestimmten Zeitpunkt vollständig aushärten, was zu einem sehr robusten Filtermedium mit einer selbst in aggressiven Umgebungen leistungsfähigen Feinstrukturlage führt.

Nach einem weiteren Aspekt der Erfindung wird verfahrensgemäß auch eine bis 200°C temperaturstabile Feinstrukturlage hergestellt. Ferner wird in einer weiteren Ausgestaltung ein wasserunlösliches Filtermedium gebildet, dass sich deshalb ohne Einschränkung seiner Filterleistung in fluiden Umgebungen einsetzen läßt.

Werden die Polymerfasern der Feinstrukturlage durch Elektrospinning aus polarer, vorzugsweise wässriger Lösung hergestellt, entsteht keine große Umweltbelastung. Bei der Arbeit mit einer solchen Lösung ist es vorteilhaft, einen Schichtstapel aus wenigstens einer Materiallage, sowie wenigstens einer Feinstrukturlage mit basischen oder sauren Katalysatoren oder mit elektromagnetischen- bzw. Elektronenstrahlen in Kontakt zu bringen. Zur Erzeugung einer ausreichenden Stabilität und einer dauerhaft guten Filterleistung werden die Materiallage und die vernetzte oder vernetzbare Feinstrukturlage zumindest in einem Teilbereich mit einem weiteren Vernetzungsmittel imprägniert und bei 140 °C bis 180°C verfestigt. Die Feinstrukturlage und deren Wirksamkeit wird hierdurch nicht beeinträchtigt.

Bei einer besonderen Verfahrensvariante legt man die Polymerfasern auf einer nicht imprägnierten Materiallage ab, behandelt das so entstandene nicht imprägnierte Filtermedium als Ganzes mit einem Imprägnierungsmittel und härtet es danach als Ganzes aus.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung eines Filtermediums im Querschnitt,
- Fig. 2: eine Draufsicht auf das Filtermedium aus Fig. 1,
- Fig. 3: eine schematisch dargestellte Anordnung zum Elektroverspinnen von Polymerfasem,
- Fig. 4: das Abscheideverhalten einer anderen Ausführungsform eines Filtermediums,
- Fig. 5a: eine weitere Ausführung eines Filtermediums im Querschnitt,
- Fig. 5b: das in entgegengesetzter Richtung angeströmte Filtermedium aus Fig. 5a,
- Fig. 6a: eine noch andere Ausführungsform eines Filtermediums im Querschnitt,
- Fig. 6b: eine Abwandlung des Filtermediums aus Fig. 6a.

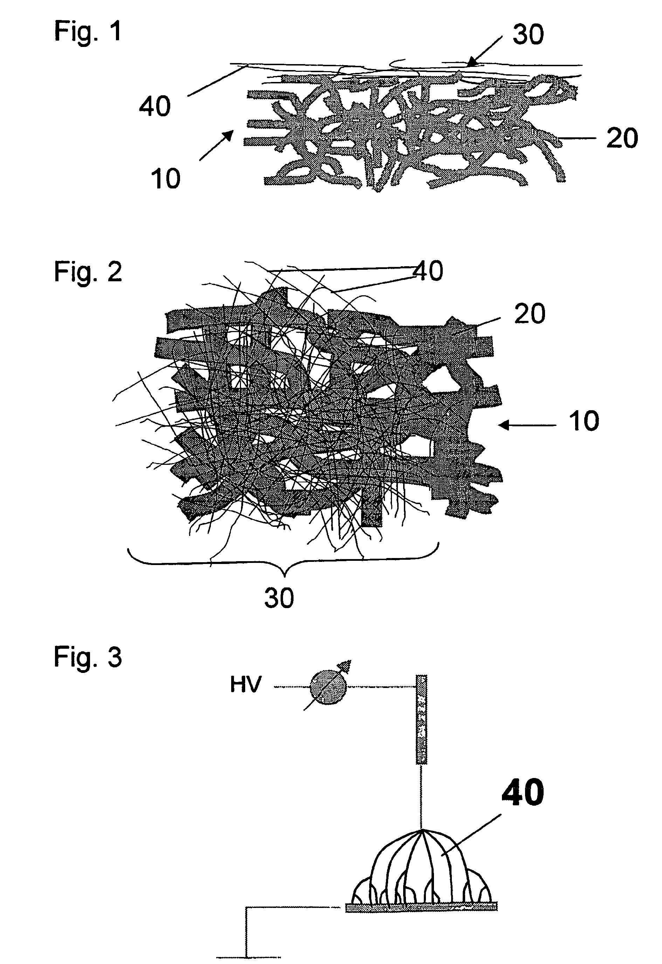

Das in Fig. 1 allgemein mit 10 bezeichnete Filtermedium ist zur Verwendung in Durchströmvorrichtungen, wie Gasreinigungsanlagen und Flüssigkeits-Aufbereitungssystemen als Flächenfilter 10 ausgebildet. Es hat eine Materiallage 20 aus Phenolharzpapier sowie eine darauf aufgebrachte Feinstrukturlage 30 aus zur Vernetzung geeigneten Polymerfasem 40, die bevorzugt aus Polyvinylalkohol bestehen und mit einem Melaminharz versetzt sind. Die Schichtdicke der größtenteils aus Zellstoff bestehenden Materiallage 20 liegt - je nach Anwendungsfall - zwischen 100 µm und 2000 µm, wobei die einzelnen Cellulosefasern mit Durchmessern zwischen 10 µm und 20 µm zahlreiche Zwischenräume von Mikrometer-Abmessungen ausbilden. Demgegenüber ist die Feinstrukturlage 30 mit Schichtdicken von 500 nm und einigen Mikrometern weit mehr als das 10-fache dünner ausgebildet als die Materiallage 20. Gleiches gilt für die Fasern 40 dieser Lage 30, die mit Durchmessern zwischen 10 nm und 200 nm deutlich dünner sind als die Fasern der Materiallage 20 und ihrerseits Zwischenräume bis hinab in den Nanometerbereich bilden.

Wie Fig. 2 zeigt, besteht das Flächenfilter 10 aus zwei übereinanderliegenden dreidimensionalen Netzen verschiedener Maschenweite, nämlich der Materiallage 20 als Trägervlies einerseits und der Feinstrukturlage 30 als Feinstrukturvlies andererseits. Beide sind aufgrund physikalischer und/oder chemischer Wechselwirkungen permanent miteinander verknüpft, so daß ein stabiler Schichtverbund gebildet ist. Die als Netzwaben anzusehenden Zwischenräume zwischen den Fasern der einzelnen Lagen wirken als Teilchensiebe mit statistisch verteilter Maschenweite im Mikrometer- bzw. Nanometerbereich. Messungen haben ergeben, daß beispielsweise die Materiallage 20 im Mittel Teilchen größer gleich 1 µm zu 95 % zurückhält, während die Feinstrukturlage 30 überdies mindestens 2,5-mal kleinere Teilchen am Durchströmen des Filtermediums 10 wirksam hindert, was zu sehr guten Abscheideraten führt.

Die Fasern 40 der Feinstrukturlage 30 werden durch elektrostatisches Verspinnen unmittelbar auf dem mit Reaktivharzen wie etwa Phenolharz imprägnierten Papier 20 abgelegt. Hierzu wird eine wässrige Lösung von Polyvinylalkohol katalytisch angesäuert und mit einem Melaminformaldehydharz als Vernetzungsmittel versetzt. Anschließend wird diese Lösung, wie in Fig. 3 dargestellt, auf der Materiallage 20 homogen versponnen, wodurch die Feinstrukturlage 30 entsteht. Letztere bildet auf der Materiallage 20 ein permanenthaftendes Fasergewirr.

Nach dem Aufbringen der auch als Nanofaserlage bezeichneten Feinstrukturlage 30 wird das Filter 10 bei Bedarf entsprechend geometrischer Vorgaben mechanisch geformt und einige Minuten bei einer Temperatur zwischen 140 °C und 180 °C behandelt. Hierbei vernetzen die Fasern 40 der Feinstrukturlage 30 miteinander. Die mit Phenolharz getränkte Materiallage 20 härtet aus und das Filtermedium 10 erhält insgesamt eine außerordentlich hohe Formstabilität. Es zeigt so gut wie kein Quellverhalten und ist zugleich wasserunlöslich.

Wie die nachfolgenden Tabellen 1 und 2 zeigen, wird durch das Aufbringen der Feinstrukturlage 30 der Anfangsabscheidegrad des im Gasstrom betriebenen Filters 10 deutlich verbessert, wobei die Luftdurchlässigkeit des gesamten Filtermediums 10 nur geringfügig abnimmt. Ein weiterer Vorteil besteht darin, daß selbst in feuchten Umgebungen und nach Kontakt mit Wasser die Abscheideleistung des Filtermediums 10 nicht sinkt.

**Tabelle 1: Luftdurchlässigkeit und Abscheidegrade (PALAS-Retentionen) des Filtermediums nach thermischer Behandlung sowie Versetzen mit Wasser**

| | Material-lage | Materiallage mit Feinstruktur lage | Filtermedium nach thermischer Behandlung | Filtermedium nach thermischer Behandlung und Wasserbehandlung |
|---|---|---|---|---|
| Luftdurchlässigkeit [l/m²s] | 185 | 140 | 140 | 140 |
| 80 % Abscheidung bei Korngröße in µm | 0,604 | n.a. | n.a. | n.a. |
| 95 % Abscheidung bei Korngröße in µm | 2,707 | 0,34 | 0.34 | 0,34 |
| | n.a. = nicht analysierbar, weil außerhalb des Meßbereichs (< 0,294 µm) | | | |

Tabelle 1 und 2 zeigen, daß sich der Abscheidegrad des Filters 10 nach dem Aushärteprozeß bei Temperaturen von 180 °C nicht oder nur unwesentlich verändert. Die vorteilhaften Filtereigenschaften bleiben mithin selbst bei einem Einsatz oberhalb von 180 °C nahezu vollständig erhalten. Dabei ist die Filterwirkung um so ausgeprägter, je mehr Polymerfasern 40 als Feinstrukturschicht 30 zum Zurückhalten kleinster Teilchen auf einem als Materiallage 20 verwendeten, harzimprägnierten Trägerpapier abgelegt werden. Es fällt weiter auf, daß durch die Feinstrukturlage 30 das Gewicht und die Dicke des Trägerpapiers und somit dessen Volumen nicht meßbar ansteigt. Dies gilt auch für eine sehr dicht aufgebrachte Feinstrukturlage 30. Folglich kann eine erheblich höhere Filterleistung erreicht werden, ohne dem Anwender deswegen ein größeres und schwereres Filtermedium 10 bereitstellen zu müssen. Es erübrigt sich deshalb, Anlagen auf neue Filterabmessungen umzustellen bzw. anzupassen.

**Tabelle 2: Flächengewicht, Dicke, Luftdurchlässigkeit sowie Abscheidegrade (PALAS®-Fraktionsabscheidegrade) und Temperaturbeständigkeit des Filtermediums als Funktion der Menge an Feinstrukturlage, Feinstrukturlage auf der Abströmseite**

| | ohne Feinstrukturlage | mit wenig Feinstrukturlage | mit mehr Feinstrukturlage | mit viel Feinstrukturlage |
|---|---|---|---|---|
| Flächengewicht [g/m²] ISO 536 | 120 | 120 | 120 | 120 |
| Dicke [mm] | | | | |
| ISO 534 | 0,76 | 0,76 | 0,76 | 0,76 |
| Luftdurchlässigkeit [l/m²s] DIN 531887 (A=20 cm²) | 238 | 221 | 180 | 166 |
| 80 % Abscheidung aller Partikel bei einer Korngröße von µm DIN 44956/2 | 0,523 | n.a. | n.a. | n.a. |
| 95 % Abscheidung aller Partikel bei einer Korngröße von µm DIN 44956/2 | 1,075 | 0,604 | 0,523 | n.a. |
| Temperaturbeständigkeit [°C] | | >180 | >180 | >180 |
| n.a. = nicht analysierbar, weil außerhalb des Meßbereichs (< 0,294 µm) | | | | |

Weiterhin besitzt das erfindungsgemäße Filtermedium 10 die gleichen mechanischen Eigenschaften, wie das bereits als Materiallage 20 eingesetzte Trägerpapier. Feinstrukturlage 30 und Trägerpapier 20 verhalten sich zusammen wie eine einzige Materiallage. An dieser treten deshalb selbst bei extremer chemischer, thermischer oder mechanischer Beanspruchung der einzelnen Filterlagen 20, 30 keine Grenzflächenphänomene auf, wie Spannungen infolge unterschiedlich starker Wärmedehnungen oder variabler Kompressibilitäten. Diese homogene Formstabilität eines Filtermediums 10 läßt sich bei mit Meltblown-Fasern belegten Filtern nicht beobachten.

Weiterhin läßt sich das erfindungsgemäße Filtermedium, wie Tabelle 3 zeigt, erfolgreich auch in Flüssigkeitsströmen einsetzen.

**Tabelle 3: Luftdurchlässigkeit, Staubaufnahmekapazität und Abscheidegrade verschiedener als Flüssigkeitsfilter verwendeter, teilweise mit Feinstrukturlage beschichteter Papiere A, B, C; Multipass-Tests mit synthetischem Öl, Feinstrukturlage auf der Anströmseite**

| Medium | Papier A | Papier B | Papier B + Feinstruktudage | Papier C | Papier C + Feinstrukturlage |
|---|---|---|---|---|---|
| Luftdurchlässigkeit (Vm²s) | 17 | 50 | 40 | 250 | 75 |
| Staubaufnahme [g] | 0,4 | 0,95 | 0,95 | 2,0 | 2,1 |
| β-Wert (20) [µm] | 6 | 12 | 8 | > 16 | 12 |

Der β-Wert gibt die Filterleistung in einer Flüssigkeit an. Er ist ein Maß für die Fähigkeit eines Filters, Teilchen bis hinab zu der angegeben Größe aus einer Flüssigkeit abzuscheiden. In Tabelle 3 wurden β (20)-Werte bestimmt. Die Zahl 20 besagt, daß pro 20 Teilchen jeweils eines (sprich 5 %) das Filter passiert, was einem Abscheidegrad von 95 % entspricht. Man erkennt, daß durch Belegung mit der Feinstrukturlage 30 wesentlich kleinere Partikel zu 95 % daran gehindert werden, daß Filtermedium 10 zu durchfließen. Beispielsweise hält unbeschichtetes Papier B bis zu 12 µm kleine Partikel, beschichtetes jedoch bis zu 8 µm kleine Teilchen zurück. Damit kommt letzteres der Abscheideleistung von Papier A sehr nahe, kann aber gleichzeitig seine gegenüber diesem viel höhere Staubaufnahmekapazität und Luftdurchlässigkeit bewahren.

Mithin ist das Flächenfilter 10 aufgrund von Imprägnierung und Vernetzung nicht nur wasserfest. Vielmehr bleibt die aus polarer, meist wässriger Lösung gewonnene Feinstrukturlage 30 bei Temperaturen bis 180 °C und sogar bis 200 °C vollständig erhalten. Das gesamte Filter 10 und besonders die Feinstrukturlage 30 behält selbst unter Extrembedingungen seine hohe Filterleistung, was zahlreiche Anwendungsmöglichkeiten eröffnet, die mit herkömmlichen Filtern nicht zu realisieren sind. So kann es beispielsweise in wässrigen, stark salzbeladenen Medien genauso eingesetzt werden wie in organischen oder metallorganischen Lösemitteln, da die Feinstrukturlage 30 nicht zersetzt wird. Es eignet sich gleichermaßen für die Abtrennung von Feststoffen aus petrochemischen Flüssigerzeugnissen wie für die Reinigung korrosiver Abwässer mit hohem Schwermetallgehalt. Auch heiße, ätzend wirkende Dämpfe von Säuren, Basen oder aggressiven Gasen können die Filterleistung nicht beeinträchtigen.

Das Filtermedium 10 zeichnet sich im weiteren dadurch aus, daß sich im Bereich der Feinstrukturlage 30 kein tief eindringender Filterkuchen ausbildet. Die Engmaschigkeit dieser Filterlage 30 bewirkt, daß eine sehr große Oberfläche entsteht. Partikel werden deshalb vornehmlich im Oberflächenbereich, sprich in den obersten Netzschichten der Feinstrukturlage 30 bereits zurückgehalten. Sie sind mittels Druckluft in Umkehrrichtung wieder leicht aus dem Filtermedium 10 zu entfernen. Die Ausbildung eines nur dünnen Filterkuchens bringt auch den Vorteil mit sich, daß das Filtermedium 10 kontinuierlich durchströmbar bleibt und die Strömungsleistung mit der Zeit nicht erhöht werden muß, um den durch den Filterkuchen entstehenden Widerstand zu überwinden.

Die Feinstrukturschicht 30 wird durch elektrostatisches Verspinnen der verschiedensten Polymere aus einer Elektrode hergestellt. Bei diesem schematisch in Fig. 3 gezeigten Verfahren können sich auch verzweigte Faserformen bilden. Beispielsweise wird das Elektrospinning aus der Schmelze oder aus der Lösung für folgende Thermo- und/oder Duroplaste eingesetzt: Polyacrylnitril, Polyacrylat, Polymethacrylat, Ethylenglykolmonomethacrylat, Hydroxyethylmethacrylat, Polyvinylidenchlorid, Polyvinylchlorid, chloriertes Polyvinylchlorid, Polyvinylidenfluorid, Polychlortrifluorethylen, Polysulfone, Polyethersulfone, sulfonierte Polysulfone, Polyphenylensulfid, Polyimide, Polyamide, Polycarbonate, Arylate, Polyaryletherketone, Polystyrole, Polyvinylbutyral, Polyurethan, Polyvinylacetat, Polyvinylacetal, Polyvinylether, Polyethylen, Polypropylen, Polybuten-1, Polymethylpenten, Polyoxymethylene, Polyester, Polyacrylamide wobei auch copolymere, oligopolymere und blockco- bzw. oligopolymere Formen dieser Moleküle Verwendung finden. Als wasserlösliche Polymere werden neben Polyvinylalkohol auch Polyacrylsäure, Polyethylenoxid, und/oder Polyvinylpyrrolidon eingesetzt. Letztere sind in ihren wässrigen Lösungen umweltfreundlich handhabbar.

Um besonders hohe Abscheidegrade bei gleichzeitig hoher Luftdurchlässigkeit zu erreichen, ist es dienlich, die Polymerfasern 40 nach ihrer Größe geordnet auf der Trägerbahn 20 abzulegen. Man geht dabei so vor, daß zuerst gröbere Fasern mit einem Durchmesser bis zu 1 µm aufgebracht werden, auf die zusehends dünnere Fasern 40 folgen, so daß eine trichterförmige Filterwirkung entsteht. Der Durchmesser der einzelnen Fasern wird durch die an der Spinnelektrode einzustellenden Parameter und insbesondere durch die Viskosität der zu verspinnenden Polymerlösung oder Polymerschmelze bestimmt. Diese Parameter sind für jedes Gemisch aus Polymer, Vernetzungsmittel und Katalysator spezifisch.

Die aus dem jeweiligen Polymer erzeugten Fasern 40 vernetzen untereinander und/oder mit reaktiven Gruppen der Materiallage 20. Diese Vernetzung läßt sich je nach Anwendungsfall zu verschiedenen Zeitpunkten initiieren. Als Vernetzungsmittel verwendet man bevorzugt Melamin-Formaldehydharze und Harnstoff-Formaldehydharze, aber auch Epoxyharze, Acrylharze, Naßfestmittel und Polyesterharze oder eine Mischung der genannten Substanzen. In der Regel werden diese wenigstens bifunktionellen Vernetzer mit dem Polymer und einem Katalysator bereits in der elektrostatisch zu verspinnenden Lösung oder Schmelze homogen zusammengebracht. Dies bedeutet eine Vernetzung *in situ,* also zum Zeitpunkt der Entstehung der elektrogesponnenen Fasern 40. Läuft dieser Prozeß zu schnell ab, kann der Katalysator auch nach dem Verspinnen der Polymerfasern 40 mit diesen in Kontakt gebracht werden, beispielsweise in Form eines sich feinst verteilt abscheidenden Sprühnebels. Bei einer nicht ausreichend hohen Vernetzungsgeschwindigkeit führt eine Erhöhung der Temperatur auf 140 °C bis 180 °C zu einem zügigen Reaktionsverlauf.

Neben der vernetzten Feinstrukturlage 30 werden einzelne Filterlagen 20, 30 durch Imprägniermittel formfest und wasserabweisend gestaltet. Hierbei verwendet man bevorzugt Kunstharze, wie Phenolplaste, Aminoplaste (Melaminharze, Hamstoff-Formaldehyd-Harze), ungesättigte Polyesterharze, Acrylharze, Epoxidharze, Alkydharze, Polyurethanharze, Silikonharze, Vinylpolymerisate, sowie polymere Fettsäuren oder Mischungen daraus. Es kommen jedoch auch aus natürlichen Quellen gewonnene Mittel wie Leim, Stärke oder Kasein zum Einsatz. Phenolharze werden in großem Umfang unter den verschiedensten Reaktionsbedingungen verwendet, härten zeitnah jedoch nur bei einer Temperatur von 140 °C bis 180 °C vollständig aus. Dies stellt jedoch bei einem erfindungsgemäßen Filtermedium kein Problem dar. In der Regel werden elektrogesponnene Polymerfasern 40 auf einer harzimprägnierten und durch Trocknung bereits ausgehärteten oder getrockneten, aber noch nicht ausgehärteten Materiallage 20 abgelegt.

Es wurden auch bereits Versuche unternommen, eine oder mehrere nicht imprägnierte Materiallagen 20 mit einer Feinstrukturlage 30 zu belegen. Das so gebildete, unfertige Filtermedium 10 wird dann als Ganzes mit einer Reaktivharz-Lösung imprägniert oder getränkt und bei Temperaturen zwischen 140 °C und 180 °C ausgehärtet. Geht man so vor, findet die vollständige Vernetzung der Feinstrukturlage 30 und die vollständige Trocknung bzw. Aushärtung der Materiallage(n) 20 simultan während einer einzigen thermischen Behandlung statt. Eine vorab auszuhärtende Materiallage 20, beispielsweise ein vorab getrocknetes Phenolharzpapier, wird nicht mehr benötigt. Es ist jedoch zu beachten, daß die Polymerfasern 40 der Feinstrukturlage 30 erst nach der thermischen Behandlung vollständig vernetzt und unlöslich bzw. formstabil sind. Das zum Imprägnieren verwendete Reaktivharz darf deshalb nicht in einem Lösemittel gelöst sein, in dem sich die Polymerfasern 40 der Feinstrukturlage 30 ebenfalls auflösen. Beispielsweise sind wässrige Phenolharz-Lösungen ungeeignet, wenn die Feinstrukturlage 30 aus nicht vernetzten Polyvinylalkohol-Fasern besteht.

Welcher Katalysator für die Vernetzung der Polymerfasern 40 der Feinstrukturlage 30 oder zur Imprägnierung und Verfestigung der übrigen Materiallagen 20 einzusetzen ist, hängt vom gewählten Polymer und/oder Crosslinker ab. Meist werden Lewis- oder Brönsted-Säuren, sowie deren Basen verwendet. Für die Vernetzung von Polyvinylalkohol mit Melaminharzen beispielsweise eignet sich verdünnte Zitronensäure, Ameisensäure oder Orthoborsäure. Eine radikalische Verbrückung von Acrylamid Polymerketten wird vorteilhaft mit wenigen Tropfen einer Kaliumperoxodisulfat-Lösung erreicht. Weitere Verbindungen mit Oxidations- oder Radikalstarter-Eigenschaften, wie beispielsweise AIBN oder eine verdünnte KMnO₄-Lösung, sind ebenfalls verwendbar. Die Vernetzung und Verfestigung der mit Kunstharz behandelten Filterlagen 20, 30 wird weiterhin durch hohe Temperatur, durch UV-Bestrahlung oder mittels Elektronenstrahlhärtung erreicht.

Für die Materiallagen 20, also die als Träger dienenden Faserlagen, werden hauptsächlich Cellulosefasern und Synthesefasern in verschiedenster Anordnung verwendet. Letztere verleihen dem Filtermedium 10 besondere Resistenz gegen petrochemische Erzeugnisse, insbesondere Öle und Altöle. Die synthetischen Fasern können beispielsweise im Zellstoffgewebe zu dessen Verfestigung eingeflochten sein, so daß ein Zellstoff-Synthesefaser-Mischgewebe mit variablen Gewichtsanteilen der einzelnen Fasern entsteht. Außerdem können Zellstoffvliese mit Synthesefaservliesen kaschiert werden, d.h. eine Zellstoffschicht wird mit einer synthetischen Schicht laminiert oder verklebt. Schließlich ist auch eine Kadierung durchführbar, sprich eine punktförmige Verschweißung von Faserschichten durch Synthesefasern. Durch die Mischung verschiedener Fasertypen erreicht man auf einfache Weise, daß wenigstens eine Materiallage 20 aus Fasern besteht, die neben Durchmessern größer 1 µm anteilig auch Durchmesser kleiner und/oder gleich 1 µm aufweisen.

In einer anderen Ausführungsform besteht die Materiallage 20 aus Mikroglasfasern (MGF) oder einem Mikroglasfaser-Zellstoff-Kombigewebe. Auch synthetische Fasern werden bei Bedarf mit Mikroglasfasern kombiniert. Letztere besitzen im Vergleich zu Zellstoffverbänden eine höhere Abscheide- bzw. Filterleistung. Durch das Aufbringen der vernetzbaren Feinstrukturlage 30 läßt sich jedoch auch hier die Filterleistung noch einmal deutlich steigern und gleichzeitig die ansonsten erforderliche Menge an teurem Mikroglasfaserpapier stark reduzieren. So ist es beispielsweise möglich, ein F7-Filter, das in der Lage ist 85 % aller Teilchen mit einem Durchmesser von 300 nm zurückzuhalten, zu einem F9-Filter zu verbessern, das 98 % aller 300 nm großen Partikel am Durchdringen der Mehrfaserschicht hindert. Bei Optimierung der Parameter Schichtdicke, Größe und Ausrichtung der Fasern, sowie Verspannung und Verstreckung derselben lassen sich sogar Qualitätsstandards für HEPA-Filtermedien (85 % bis 99,995 % Rückhaltevermögen) und ULPA-Filtermedien (99,9995 % bis 99,999995 % Rückhaltevermögen) erreichen, wobei die Filter nicht nur wasserbeständig sind, sondern auch unter extremen Temperaturbedingungen eingesetzt werden können.

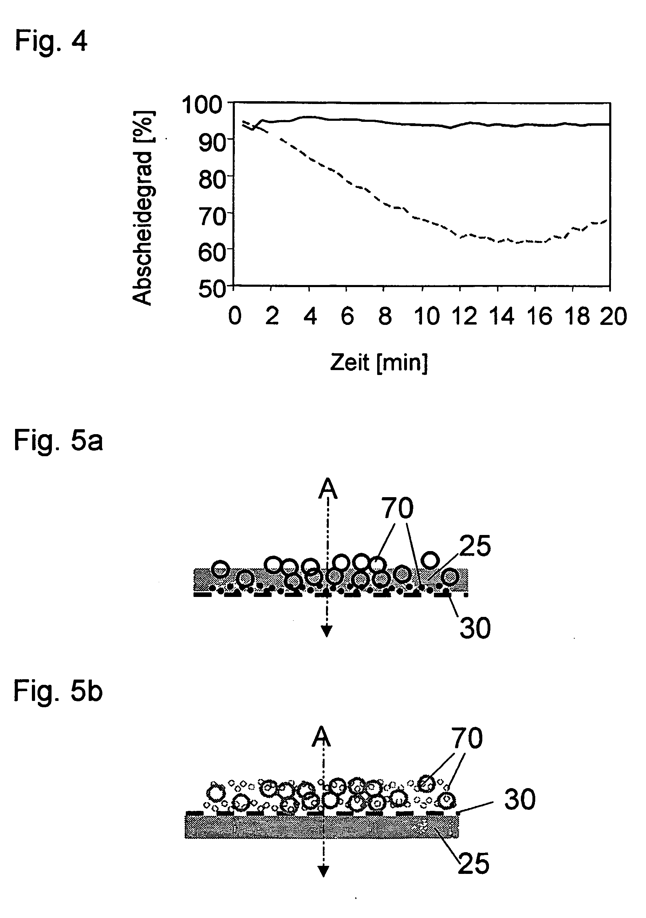

Besonders interessant ist eine Ausgestaltung der Erfindung, bei der die Feinstrukturlage 30 auf Elektretmedien, also elektrostatisch aufgeladenen Trägern abgelegt wird. Diese Medien zeichnen sich durch eine hohe Filterleistung aus, welche binnen weniger Minuten nach Verwendungsbeginn jedoch stark abfällt. Beispielsweise werden, wie durch die gestrichelt gezeichnete Kurve in Fig. 4 gezeigt, bei dem Elektretmedium Technostat^{®} anstelle von 95 % aller abzutrennenden Partikel nach 14 Minuten nur noch 63 % wirksam zurückgehalten. Ursache hierfür ist die mit zunehmender Menge abgefilterter Teilchen sinkende elektrostatische Aufladung der Elektretschicht. Beschichtet man ein solches Elektretmedium jedoch mit einer Feinstrukturlage 30 aus vernetzbaren Polymerfasern 40, so kommt es zu keinem Abfallen der hohen Anfangsfilterleistung. Diese wird im Einklang mit der durchgezogenen Linie in Fig. 4 vielmehr noch gesteigert und zeitkonstant auf diesem hohen Niveau gehalten.

Eine kostengünstige und dabei sehr leistungsfähige Bauform eines Filtermediums 10 verwendet als Materiallage 20 ein großporiges Basismedium 25, wie in Fig. 5a dargestellt. Dieses großporige Vlies 25 besitzt nur geringe Filterwirkung, ist aber in der Lage, große Mengen an Staubteilchen 70 aufzunehmen, ohne daß der Anströmdruck während des Filtrationsvorganges kontinuierlich erhöht werden muß, um eine gleichbleibend hohe Durchlässigkeit für ein Gas oder eine Flüssigkeit zu gewährleisten. Um den Abscheidegrad dieser wenig effizienten Materiallage 25 deutlich zu verbessern, wird auf ihr eine Feinstrukturlage 30 aus elektroversponnen vernetzten oder vernetzbaren Polymerfasern 40 abgelegt. Die dabei erzielten Verbesserungen der Werte für Staubaufnahme und Abscheidegrad können nachfolgend Tabelle 4 entnommen werden.

**Tabelle 4: Steigerung der Staubaufnahme und des Abscheidegrades durch Beschichtung großporiger Basismedien mit einer Feinstrukturlage aus elektroversponnenen Polymerfasern. Bestimmung des Filtrationsvefialtens in Lösung (Mukipass-Test mit synthetischem Öl, Feinstrukturlage auf der Anströmseite) und im Gasstrom (gravimetrisch bestimmter Abscheidegrad, Teststaub: SAE-fine, Feinstrukturlage auf der Abströmseite)**

| | Flüssigfiltration | | | Luftfiltration | | |
|---|---|---|---|---|---|---|
| Medium | Luftdurchlässigkeit [l/m²s] | Staubaufnahme [g] | β-Wert (20) [µm] | Luftdurchlässigkeit [l/m²s] | Staubaufnahme [g] | Abscheidegrad [%] |
| Papier A | 17 | 0,4 | 6 | 230 | 1,8 | 97,6 |
| Papier B | 50 | 0,95 | 12 | | | |
| Papier B mit Feinstrukturlage | 40 | 0,95 | 8 | | | |
| Papier C | 250 | 2,0 | > 16 | 1400 | 4,7 | 84 |
| Papier C mit Feinstrukturlage | 75 | 2,1 | 12 | 900 | 4,5 | 98,6 |

Der das Rückhaltevermögen in Lösung beschreibende β (20)-Wert in Spalte 4 wurde so bestimmt, wie bereits unter Tabelle 3 erklärt. Der Abscheidegrad in Spalte 7 bezieht sich jedoch auf die Gesamtheit aller erfaßbaren Teilchen und nicht auf eine PALAS-Retention, die, wie in den Tabellen 1 und 2 angegeben, die Teilchengröße als Funktion eines Abscheidewertes in Prozent angibt.

Das als Referenz herangezogene Papier A hält einen sehr hohen Prozentsatz aller Teilchen in Lösung, aber auch im Gasstrom zurück. So werden in der Flüssigkeit 95 % aller Teilchen größer gleich 6 µm am Durchtritt gehindert, während bei gasförmiger Durchströmung 97,6 % aller nachweisbaren Teilchen das Filtermedium 10 nicht passieren. Diese hohe Abtrennleistung ist jedoch nur auf Kosten einer sehr geringen Luftdurchlässigkeit und einer niedrigen Aufnahmekapazität von Staubteilchen 70 zu erreichen.

Papier B und Papier C hingegen nehmen im Vergleich zu Papier A 2,3 mal bis 5,2 mal mehr Staubteilchen 70 auf. Dafür können sie im Verhältnis zu diesem aber nur doppelt bis 2,7 mal größere Teilchen wirksam in einer Flüssigkeit zurückhalten. Im Gasstrom hindern sie lediglich 84 % aller Teilchen wirksam am Durchströmen durch das Filter.

Durch ein Belegen der Papiere B und C mit der Feinstrukturlage 30 wird deren Abscheidegrad im Gasstrom deutlich, sogar noch über jenen von Papier A hinaus, auf 98,6 % gesteigert. Auch in Lösung wird der Abscheidegrad zu kleineren β-Werten hin verschoben, beispielsweise von 12 µm auf 8 µm. Trotzdem bleibt die Staubaufnahmekapazität des Filtermediums 10 weitestgehend erhalten und kann im Einzelfall gegenüber der unbeschichteten Materiallage 20 sogar noch verbessert werden. Weiterhin steigt der Anströmdruck auf das beschichtete Basismedium 25 während eines Filtrationsvorgangs nicht an bzw. fällt hinter dem Filtermedium 10 nicht unter einen kritischen Wert ab, was die Standzeit und Lebensdauer des Filters deutlich erhöht.

Fig. 5b zeigt das aus entgegengesetzter Richtung angeströmte Filtermedium 10 aus Fig. 5a. Hier treffen die abzufilternden Staubteilchen 70 unmittelbar auf die Feinstrukturlage 30 auf. Sie bilden auf ihr eine ungeordnete Staubschicht (Filterkuchen) verschieden großer Staubteilchen 70. Strömen letztere jedoch, wie in Fig. 5a zu sehen, das großporige Basismedium 25 an, so dringen kleine Staubteilchen 70 (kleine Kreise) tiefer darin ein als größere (große Kreise), weshalb die Staubaufnahmekapazität hier höher ist.

Eine weitere Ausgestaltung der Erfindung sieht vor, daß auf der Materiallage 20 und/oder auf der Feinstrukturlage 30 jeweils eine weitere Materiallage 20 als Deckschicht angeordnet ist. Hierbei handelt es sich beispielsweise um einen Überzug, der die jeweilige Schichtlage vor zerstörerischen Einwirkungen schützt, ohne die Filterleistung zu beeinträchtigen.

Bevorzugt bedient man sich für diese Schicht des gleichen Fasergrundstoffs, wie bei der ersten Materiallage 20 oder der Feinstrukturlage 30. Es können jedoch auch unterschiedliche Materialien Verwendung finden, die in geringer Schichtdicke aufgebracht werden. In diesem Fall hat die Deckschicht nicht nur eine Schutzfunktion, sondern nimmt aufgrund ihrer zur Materiallage 20 unterschiedlichen chemischen Beschaffenheit zusätzlich eine Abtrennfunktion wahr, wobei neben der Netzwabenweite, also der Porenweite dieser Schicht, die Wechselwirkung der verschiedenen chemischen Seitengruppen der einzelnen Fasern mit der das Filter passierenden Substanz ausgenutzt wird.

Die weitere Materiallage 20 kann auch als Stützfaserlage oder als Abstandhalter zwischen der ersten Materiallage 20 und der Feinstrukturlage 30 eingebracht werden. Dies ist beispielsweise sinnvoll, wenn große Teilchenmengen transportiert werden und/oder hohe Durchflußströme auftreten. Sind Feinstrukturlage 30 und Materiallage 20 aufgrund ihrer unterschiedlichen chemischen Oberflächenzusammensetzung nicht permanenthaftend miteinander verbindbar, so wirkt die Stützfaserlage zusätzlich als Verbindungsvermittler. Beispielsweise können eine Lage aus Polypropylenfasern und eine weitere aus Polysulfonfasern besser haftend aneinander fixiert werden, wenn Polyacrylfasem oder sogar Polyamidfasern zwischen diese beiden Faserlagen eingebracht werden.

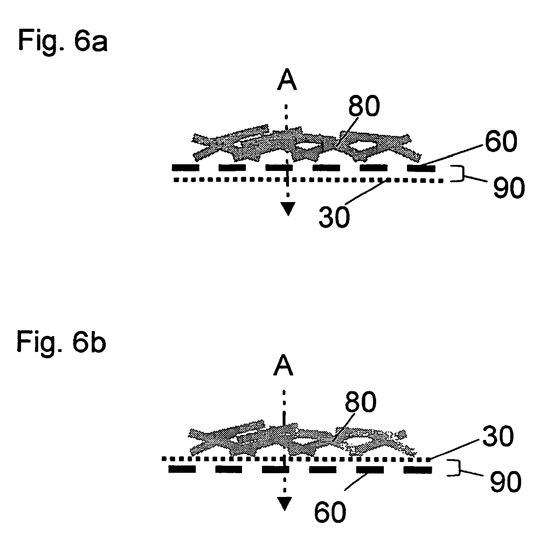

Bestimmte Trägermedien lassen sich auch aus mechanischen Gründen nicht unmittelbar mit einer Feinstrukturschicht 30 aus versponnenen Polymerfasern 40 belegen und dadurch in ihrer Filterleistung verbessern. Insbesondere kann man auf unebene oder oberflächenrauhe Filterbahnen 80 kein direktes Aufbringen erreichen, weil herausragende Einzelfasern das Fasernetz der Feinstrukturlage 30 zerreißen oder wenigstens sehr ungleichmäßig machen würden. Man bringt die Feinstrukturschicht 30 deshalb auf eine offenporige Verbindungslage 60 auf, die sehr dünn und deshalb nahezu ohne jede Filterwirkung ist. Das so gebildete Komposit 90 kann dann - wie in Fig. 6a und 6b gezeigt - mit der oberflächenrauhen oder unebenen Filterbahn 80 verbunden, beispielsweise kadiert werden.

Der Verbindungslage 60 kommen in Fig. 6a zwei wesentliche Aufgaben zu. Sie stellt als weitere Materiallage 20 eine Verbindung zur Filterbahn 80 her und ist eine Stützfaserlage für die Feinstrukturschicht 30. Bei der Bauform in Fig. 6b grenzt die Schicht 30 des Komposits 90 an die oberflächenrauhe Filterbahn 80 unmittelbar an. Diese Ausgestaltung ist dann von Vorteil, wenn die Feinstrukturschicht 30 vor Einflüssen von außen weitestgehend geschützt werden soll, Beschädigungen durch die oberflächenrauhe Filterbahn 80 jedoch nicht zu erwarten sind.

Soll ein Ankleben von besonders fest haftenden Filtraten oder Filterstäuben am Filter vermieden werden, sieht die Erfindung eine passivierte Form des beschriebenen Filtermediums 10 vor. Die Einzelschichten bzw. die verschiedenen Fasern werden zu diesem Zweck an ihrer Oberfläche zumindest abschnittsweise hydrophobisiert, wobei meist Alkylierungs- oder Silylierungs (Silanisierungs)-Reagenzien eingesetzt werden. Teilfluorierte oder perfluorierte Polymerfasern zeichnen sich bereits durch ihre hydrophobe Oberfläche aus und müssen nicht mehr speziell behandelt werden. Jedoch sind sie teuer in der Anschaffung, weshalb sie nur zum Einsatz kommen, wenn höchste Ansprüche an das Filtermedium 10 gestellt werden.

Neben der Oberflächenpassivierung kann man das Filtermedium 10 in einer noch anderen Ausführungsform speziell mit Schutzpartikeln und/oder Signalmolekülen ausstatten. Beispielsweise zeigen Fluoreszenzfarbstoffe durch ihr Absorptionsvermögen an, wie stark das Filtermedium 10 mit Partikeln beladen ist, was Rückschlüsse auf die Filterleistung zuläßt. Weiterhin finden neben den verschiedensten Flammschutzmitteln in erster Linie Affinitätsliganden Anwendung. Letztere werden kovalent an die jeweilige Faserlage gebunden und helfen bei biologischen, biochemischen und analytischen Fragestellungen, bestimmte Spezies aus der zu filternden Luft oder Flüssigkeit abzusondern. So sind z. B. Lecitine dazu geeignet, an ihrer Oberfläche zuckertragende Teilchen zurückzuhalten. Streptavidin ist ein weiterer Affinitätsligand, der mit einer Biotingruppierung versehene Teilchen selektiv herausfiltert. Insbesondere im Hinblick auf die zunehmende Belastung der Umwelt mit Allergenen und biologischen Erregern wie Viren oder z.B. des als Auslöser für den Rinderwahnsinn vermuteten, verändert gefalteten Prionproteins, ist die Kopplung von Liganden an das sehr effiziente Filtermedium 10 technisch und wirtschaftlich äußerst interessant.

Das Filtermedium 10 ist so aufgebaut, daß die Feinstrukturlage 30, wie beispielsweise in Fig. 5 gezeigt, jeweils an- oder abströmseitig an der Materiallage 20 anliegt, wobei an oder zwischen diesen Lagen weitere Materiallagen 20 als Deck- oder Stützschichten anbringbar sind. Neben der Grundbauform ist das Filtermedium 10 für besonders platzsparende Anwendungen so konzipiert, daß die Dicke der Materiallage 20 jener der Feinstrukturlage 30 entspricht. Ein Partikel- oder Molekülfilter ist aus einem oder mehreren hintereinander liegenden Filtermedien 10 aufgebaut.

Die Bruchkraft des Filtermediums 10 hängt von seiner Zusammensetzung ab, weshalb z. B. für die Materiallage 20 nur ein ungefährer Wert angegeben werden kann, der in der Längsrichtung in der Regel größer 35 N und in der Transversalen größer 25 N ist. Weiterhin ist auch für die Faserdurchmesser der Feinstrukturlage 30 nur ein gemittelter mit einem Fehler behafteter Wert angebbar, da die elektrostatische Spinnfaserherstellung im Standardbetrieb zu einer statistischen Verteilung von Fasern verschiedener Durchmesser führt. Es ist jedoch davon auszugehen, daß der Durchmesser der Feinstrukturfasem, also der Polymerfasern 40 der Feinstrukturlage 30, nicht unter 10 nm liegt.

Die Erfindung ist nicht auf eine der vorbeschriebenen Ausführungsformen beschränkt, sondern in vielfältiger Weise abwandelbar. So können beispielsweise in der Materiallage 20 Carbonfasern oder Silikafasern Verwendung finden. Diese müssen jedoch aus Kohlenwasserstoffverbindungen, wie Cellulose, Methylcellulose, Propylcellulose, Cyclodextrin oder Stärke bzw. aus den entsprechenden Silanolen oder Silikonen durch Pyrolyse unter Luftausschluß vorab hergestellt werden. Ferner können die für die Feinstrukturlage 30 genannten Polymere und deren Pyrolyseprodukte (Carbonfasem), aber auch aus Siliziumverbindungen erhaltene Silikafasern und selbst Metallfasern verwendet werden. Ein Filtermedium 10 bestehend aus einer Materiallage 20 aus Metallfasern und einer Feinstrukturschicht 30 aus Carbonfasern ist selbst bei extrem hohen Temperaturen bis hin zu 1.500 °C einsetzbar.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritte, können sowohl für sich als auch in den verschiedensten Kombinationen erfindungswesentlich sein.

Man erkennt, daß ein neuartiges Filtermedium 10 entwickelt wurde, das neben Mikropartikeln auch Teilchen mit Nanometerabmessungen wirksam zurückhält. Es besteht erfindungsgemäß aus mindestens einer Materiallage 20 und aus mindestens einer Feinstrukturlage 30, wobei für erstere bevorzugt vernetzte Zellstoffasern und Mikroglasfasern, aber auch aus Polymeren aufgebaute Fasern verwendet werden. Die Durchmesser der Fasern der Materiallage 20 bewegen sich im Mikrometerbereich und die Poren dieser Schicht haben größtenteils quadratmikrometergroße Querschnitte. Die mit Flächengewichten unter 1 g/m² sehr leichte Feinstrukturlage 30 besitzt Zwischenräume bis hinunter in den Nanometerbereich und ist bei Temperaturen über 180 °C thermisch stabil. Sie besteht aus Fasern 40, die aus Polymeren durch elektrostatisches Verspinnen gewonnen werden und Durchmesser im Nanometerbereich haben. Um einzelne dieser Fasern 40 untereinander oder mit der Materiallage 20 zu vernetzen und dadurch wasserunlöslich, sowie chemisch und thermisch stabil zu machen, werden verschiedene Harze, beispielsweise Melaminharze eingesetzt. Zu Schutz- und Stabilitätszwecken kann das Filtermedium 10 mit Stütz- und/oder Deckschichten ergänzt werden.

### Bezugszeichenliste

- A: Anströmrichtung
- HV: Hochspannung

- 10: Filtermedium
- 20: Materiallage
- 25: großporiges Basismedium
- 30: Feinstrukturlage, Feinstrukturschicht
- 40: Polymerfasern
- 60: offenporige Verbindungslage
- 70: Staubteilchen (verschieden groß)
- 80: rauhe Filterbahn
- 90: Komposit aus 60 und 30

## Patentansprüche

1. Filtermedium zur Verwendung in durchströmbaren Vorrichtungen, mit wenigstens einer Materiallage (20) und mit wenigstens einer auf der Materiallage (20) permanenthaftend aufgebrachten Feinstrukturlage (30) bestehend aus elektrostatisch versponnenen Polymerfasern (40) mit einem durchschnittlichen Faserdurchmesser kleiner und/oder gleich 1 µm, wobei die Polymerfasern (40) über ein Vernetzungsmittel (cross-linker) miteinander vernetzt sind, und die Vernetzung der Polymerfasern (40) unter Einwirkung eines Katalysators oder elektromagnetischer- bzw. Elektronenstahlen erhalten wird, **dadurch gekennzeichnet, daß** die Materiallage (20) mit einem Imprägniermittel imprägniert und verfestigt oder verfestigbar ist und die vernetzten Polymerfasern (40) bis 180 °C temperaturstabil sind.

2. Filtermedium nach Anspruch 1, **dadurch gekennzeichnet, daß** die Materiallage (20) ein Zellstoff-Synthesefaser-Mischgewebe ist, wobei die Synthesefasern im Zellstoffgewebe eingeflochten oder kadiert sind und die vernetzten Polymerfasern (40) bis 180 °C temperaturstabil sind.

3. Filtermedium nach Anspruch 1, **dadurch gekennzeichnet, daß** es wasserfest ist.

4. Filtermedium nach einem der Ansprüche 1 bis 3, **dadurch gekennzeichnet, daß** die vernetzten Polymerfasern (40) bis 200 °C temperaturstabil sind.

5. Filtermedium nach einem der Ansprüche 1 bis 4, **dadurch gekennzeichnet, daß** die Polymerfasern (40) unvernetzt bis 200°°C temperaturstabil sind.

6. Filtermedium nach einem der Ansprüche 1 bis 5, **dadurch gekennzeichnet, daß** die Polymerfasern (40) auf wenigstens einer der Materiallagen (20) permanent selbsthaftend sind.

7. Filtermedium nach einem der Ansprüche 1 bis 6, **dadurch gekennzeichnet, daß** die Polymerfasern (40) aus in polaren Lösemitteln löslichen Polymeren, insbesondere aus Polyvinylalkohol, Polycarbonsäuren, Polyacrylamid, Polyamid, Polyvinylamin, Polyvinylformamid oder daraus gebildeten Copolymeren bestehen.

8. Filtermedium nach einem der Ansprüche 1 bis 7, **dadurch gekennzeichnet, daß** die Polymerfasern (40) innerhalb der Feinstrukturlage (30) unterschiedliche Durchmesser aufweisen.

9. Filtermedium nach einem der Ansprüche 1 bis 8, **dadurch gekennzeichnet, daß** die Feinstrukturlage (30) eine Vorzugsrichtung hat, entlang der die Polymerfasern (40) nach der Größe ihres Durchmessers geordnet angeordnet sind.

10. Filtermedium nach einem der Ansprüche 1 bis 9, **dadurch gekennzeichnet, daß** das Vernetzungsmittel zur Verbindung der Polymerfasern (40) untereinander und/oder mit zumindest einer Materiallage (20) eine wenigstens bifunktionelle chemische Verbindung ist, vorzugsweise ein Phenolharz, ein Melaminformaldehydharz, ein Harnstoff-Formaldehyd-Harz, ein Epoxidharz, ein Acrylharz, ein Naßfestmittel oder eine Mischung der genannten Substanzen.

11. Filtermedium nach einem der Ansprüche 1 bis 10, **dadurch gekennzeichnet, daß** der Katalysator eine Lewis- oder Brönsted-Säure, eine Lewis- oder Brönsted-Base oder eine Verbindung mit Oxidations- oder Radikalstarter-Eigenschaften ist.

12. Filtermedium nach einem der Ansprüche 1 bis 11, **dadurch gekennzeichnet, daß** der Katalysator Wärme, Ultraschall, elektromagnetische Strahlung, vorzugsweise IR- oder UV-Licht oder ein Elektronenstrahl ist.

13. Filtermedium nach einem der Ansprüche 1 bis 12, **dadurch gekennzeichnet, daß** wenigstens eine weitere Materiallage (20) vorgesehen ist, die eine Deckschicht, eine Stützfaserlage oder eine weitere Filterschicht ist oder bildet, wobei die Feinstrukturlage (30) an wenigstens eine dieser Schichten an und/oder abströmseitig angrenzt.

14. Filtermedium nach einem der Ansprüche 1 bis 13, **dadurch gekennzeichnet, daß** das makroskopisch meßbare Volumen der Materiallage (20) nach dem Aufbringen der Polymerfasern (40) der Feinstrukturlage (30) unverändert ist.

15. Filtermedium nach einem der Ansprüche 1 bis 14, **dadurch gekennzeichnet, daß** wenigstens eine Materiallage (20) aus organischen und/oder anorganischen Fasern oder einer Komposit-Verbindung daraus besteht, insbesondere aus Zellstoff, synthetischen Fasern oder Mikroglasfasern.

16. Filtermedium nach einem der Ansprüche 1 bis 15, **dadurch gekennzeichnet, daß** wenigstens eine Materiallage (20) imprägniert und verfestigt oder verfestigbar ist, beispielsweise mit einem Phenolharz.

17. Filtermedium nach einem der Ansprüche 1 bis 16, **dadurch gekennzeichnet, daß** wenigstens eine Materiallage (20) ein großporiges Basismedium (25) mit geringer Filterwirkung oder eine offenporige Verbindungslage (60) ohne Filtereigenschaften ist.

18. Filtermedium nach einem der Ansprüche 1 bis 17, **dadurch gekennzeichnet, daß** wenigstens eine Materiallage (20) ein Elektret-Medium ist.

19. Filtermedium nach einem der Ansprüche 1 bis 18, **dadurch gekennzeichnet, daß** wenigstens eine Materiallage (20) oberflächenhydrophob ist, beispielsweise durch Alkylierung oder Silylierung (Silanisierung).

20. Filtermedium nach einem der Ansprüche 1 bis 19, **dadurch gekennzeichnet, daß** wenigstens eine Materiallage (20) ein oder mehrere Flammschutzmittel und/oder Fluoreszenzfarbstoffe enthält.

21. Filtermedium nach einem der Ansprüche 1 bis 20, **dadurch gekennzeichnet, daß** wenigstens eine Materiallage (20) mit Affinitätsliganden versehen ist.

22. Partikelfilter oder Molekülfilter mit wenigstens einem Filtermedium (10) nach Anspruch 1.

23. Verfahren zur Herstellung eines Filtermediums (10) zur Verwendung in durchströmbaren Vorrichtungen, bei welchem wenigstens ein Polymer in geschmolzenem Zustand oder in einem polaren oder unpolaren Lösemittel gelöst mittels einer Düse in einem elektrischen Feld zu Polymerfasern (40) versponnen wird, welche auf einer Materiallage (20) in Form einer Feinstrukturlage (30) abgelegt werden, wobei die Polymerfasern (40) einen durchschnittlichen Faserdurchmesser kleiner und/oder gleich 1 µm aufweisen und zwischen den Polymerfasern (40) Zwischenräume ausgebildet sind,
a) wobei der Polymer-Schmelze bzw. der Polymer-Lösung ein Vernetzungsmittel zugesetzt wird,
b) und die auf der Materiallage (20) abgelegten Polymerfasern (40) mit dem Vernetzungsmittel unter Vermittlung eines Katalysators oder elektromagnetischer- bzw. Elektronenstahlen vernetzen und/oder vernetzt werden,
**dadurch gekennzeichnet, daß** die Materiallage (20) mit einem Imprägniermittel imprägniert wird und daß die Feinstrukturlage (30) bis 180 °C vollständig erhalten bleibt.

24. Verfahren nach Anspruch 23, **dadurch gekennzeichnet, daß** eine bis 200°C temperaturstabile Feinstrukturlage (30) hergestellt wird.

25. Verfahren nach Anspruch 23 oder 24, **dadurch gekennzeichnet, daß** ein wasserunlösliches Filtermedium (10) gebildet wird.

26. Verfahren nach einem der Ansprüche 23 bis 25, **dadurch gekennzeichnet, daß** die Polymerfasern (40) der Feinstrukturlage (30) durch Elektrospinning aus polarer, vorzugsweise wässriger Lösung hergestellt werden.

27. Verfahren nach einem der Ansprüche 23 bis 26, **dadurch gekennzeichnet, daß** ein Schichtstapel aus wenigstens einer Materiallage (20), sowie wenigstens einer Feinstrukturlage (30) mit basischen oder sauren Katalysatoren oder mit elektromagnetischen- bzw. Elektronenstrahlen in Kontakt gebracht wird.

28. Verfahren nach einem der Ansprüche 23 bis 27, **dadurch gekennzeichnet,**
a) **daß** die Polymerfasern (40) auf einer nicht imprägnierten Materiallage (20) abgelegt werden,
b) **daß** das so entstandene nicht imprägnierte Filtermedium (10) als Ganzes mit einem Imprägnierungsmittel behandelt
c) und danach als Ganzes ausgehärtet wird.

## Claims

1. A filter medium for use in thru-flow contrivances, containing at least one supporting layer (20) and at least one fine fiber layer (30) permanently adhering to said supporting layer (20), said fine fiber layer (30) comprising electrostatically spun polymer fibers (40) having an average fiber diameter of less than and/or equal to 1 µm, the polymer fibers (40) being crosslinked with each other via a crosslinking agent (crosslinker), the crosslinking of the polymer fibers (40) being obtainable due to the action of a catalyst or due to electromagnetic- or electron beams, wherein
the supporting layer (20) is impregnated and stiffened or capable of being stiffened by an impregnating agent, and wherein the crosslinked polymer fibers (40) are resistant to a temperature of up to 180 °C.

2. A filter medium as defined in claim 1 wherein the supporting layer (20) is a cellulose/synthetic fiber fabric with the synthetic fibers being interwoven or spot-welded with the cellulosic fabric and wherein the crosslinked polymer fibers (40) are resistant to a temperature of up to 180 °C.

3. A filter medium as defined in claim 1, wherein said filter medium is water resisting.

4. A filter medium as defined in any one of claims 1 to 3, wherein the crosslinked polymer fibers (40) are resistant to a temperature of up to 200 °C.

5. A filter medium as defined in any one of claims 1 to 4, wherein uncrosslinked polymer fibers (40) are resistant to a temperature of up to 200 °C.

6. A filter medium as defined in any one of claims 1 to 5, wherein the polymer fibers (40) are permanently fixed by self-adherence to at least one of the supporting layers (20).

7. A filter medium as defined in any one of claims 1 to 6, wherein the polymer fibers (40) comprise polymers soluble in polar solvents, particularly polyvinyl

8. A filter medium as defined in any one of claims 1 to 7, wherein the polymer fibers (40) in the fine fiber layer (30) have different diameters.

9. A filter medium as defined in any one of claims 1 to 8, wherein the fine fiber layer (30) has a preferential direction, in which the polymer fibers (40) are disposed in a well-ordered manner according to their diameter size.

10. A filter medium as defined in any one of claims 1 to 9, wherein the crosslinking agent used to join the polymer fibers (40) to each other and/or to at least one supporting layer (20) is an at least bifunctional chemical compound, preferably a phenolic resin, a melamine-formaldehyde resin, a urea-formaldehyde resin, an epoxy resin, an acrylic resin, a wet-strength agent, or a mixture of said substances.

11. A filter medium as defined in any one of claims 1 to 10, wherein the catalyst is a Lewis acid or Broensted acid, a Lewis base or Broensted base, or a compound having oxidizing or radical-initiating properties.

12. A filter medium as defined in any one claims 1 to 11, wherein the catalyst comprises heat, supersonic waves, electromagnetic radiation, preferably IR or UV radiation, or an electron beam.

13. A filter medium as defined in any one of claims 1 to 12, wherein at least one further supporting layer (20) is provided which is or forms a cover layer, a backing layer, or another layer of filtering material, the fine fiber layer (30) being adjacent to at least one of these layers on the inflow and/or outflow side.

14. A filter medium as defined in any one of claims 1 to 13, wherein the macroscopically measurable volume of the supporting layer (20) is unchanged following the application of the polymer fibers (40) of the fine fiber layer (30).

15. A filter medium as defined in any one of claims 1 to 14, wherein at least one supporting layer (20) comprises organic and/or inorganic fibers, or a composite mixture thereof, particularly cellulose, synthetic fibers, or microglass fibers.

16. A filter medium as defined in any one of claims 1 to 15, wherein at least one supporting layer (20) is impregnated with and stiffened by, or is capable of being stiffened by, a phenolic resin for example.

17. A filter medium as defined in any one of claims 1 to 16, wherein at least one supporting layer (20) is a large-pored base medium (25) having a low filtering effect or an open-pore joining layer (60) having no filtering properties.

18. A filter medium as defined in any one of claims 1 to 17, wherein at least one supporting layer (20) is an electret medium.

19. A filter medium as defined in any one of claims 1 to 18, wherein at least one supporting layer (20) is surface-hydrophobic, for example due to alkylation or silylation (silanization).

20. A filter medium as defined in any one of claims 1 to 19, wherein at least one supporting layer (20) contains one or more flameproofing agents and/or fluorescent dyes.

21. A filter medium as defined in any one of claims 1 to 20, wherein at least one supporting layer (20) is provided with affinity ligands.

22. A particle filter or molecular filter comprising at least one filter medium (10) as defined in claim 1.

23. A process for the production of a filter medium (10) for use in thru-flow contrivances, in which at least one polymer, in the molten state or dissolved in a polar or non-polar solvent, is spun by means of a nozzle in an electric field to form polymer fibers (40) which are placed on a supporting layer (20) in the form of a fine fiber layer (30), which polymer fibers (40) have an average fiber diameter smaller than and/or equal to 1 µm, intermediate spaces being formed between said polymer fibers (40),
a) a crosslinking agent being added to the polymer melt or the polymer solution and
b) the polymer fibers (40) placed on the supporting layer (20) crosslink and/or being crosslinked with the crosslinking agent with the aid of a catalyst or electromagnetic- or electron beams, wherein
the supporting layer (20) is impregnated by an impregnating agent and the fine fiber layer (30) remains completely intact at temperatures up to 180 °C.

24. A process as defined in claim 23, wherein a fine fiber layer (30) is produced which is stable to temperatures up to 200 °C.

25. A process as defined in claim 23 or claim 24, wherein a water-resisting filter medium (10) is made.

26. A process as defined in any one of claims 23 to 25, wherein the polymer fibers (40) in the fine fiber layer (30) are produced by electrospinning of a polar, preferably aqueous, solution.

27. A process as defined in any one of claims 23 to 26, wherein a stack of layers comprising at least one supporting layer (20) and at least one fine fiber layer (30) is brought into contact with basic or acid catalysts or with electromagnetic or electron beams.

28. A process as defined in any one of claims 23 to 27, wherein
a) the polymer fibers (40) are placed on an unimpregnated supporting layer (20),
b) the resulting unimpregnated filter medium (10) is treated as a whole with an impregnating agent,
c) and is then cured as a whole.

## Revendications

1. Matériau filtrant à utiliser dans des dispositifs perméables, avec au moins une couche de matériau (20) et avec au moins une couche de structure fine (30) déposée avec une adhérence permanente sur la couche de matériau (20) constituée de fibres polymères (40) filées électrostatiquement avec un diamètre moyen des fibres plus petit et/ou égal à 1 µm, les fibres polymères (40) étant réticulées entre elles par un agent de réticulation (crosslinker) et la réticulation des fibres polymères (40) étant obtenue par l'effet d'un catalyseur ou de rayons électromagnétiques ou électroniques, **caractérisé par le fait que** la couche de matériau (20) est imprégnée et solidifiée ou solidifiable avec un agent d'imprégnation et que les fibres polymères réticulées (40) sont stables jusqu'à une température de 180 °C.

2. Matériau filtrant selon la revendication 1, **caractérisé par le fait que** la couche de matériau (20) est un tissu de fibres cellulosiques et synthétiques mélangées, les fibres synthétiques étant entrelacées ou cardées avec le tissu cellulosique et les fibres polymères réticulées (40) étant stables jusqu'à une température de 180 °C.

3. Matériau filtrant selon la revendication 1, **caractérisé par le fait qu'**il est hydrophobe.

4. Matériau filtrant selon l'une des revendications 1 à 3, **caractérisé par le fait que** les fibres polymères réticulées (40) sont stables jusqu'à une température de 200 °C.

5. Matériau filtrant selon l'une des revendications 1 à 4, **caractérisé par le fait que** les fibres polymères non réticulées (40) sont stables jusqu'à une température de 200 °C.

6. Matériau filtrant selon l'une des revendications 1 à 5, **caractérisé par le fait que** les fibres polymères (40) sont en permanence autoadhérentes sur au moins une des couches de matériau (20).

7. Matériau filtrant selon l'une des revendications 1 à 6, **caractérisé par le fait que** les fibres polymères (40) sont constituées de polymères solubles dans des solvants polaires, et notamment d'alcool polyvinylique, d'acides polycarboxyliques, de polyacrylamide, de polyamide, de polyvinylamine, de polyvinylformamide ou de copolymères qui en sont formés.

8. Matériau filtrant selon l'une des revendications 1 à 7, **caractérisé par le fait qu'**à l'intérieur de la couche de structure fine (30), les fibres polymères (40) présentent des diamètres différents.

9. Matériau filtrant selon l'une des revendications 1 à 8, **caractérisé par le fait que** la couche de structure fine (30) a une direction préférentielle, le long de laquelle les fibres polymères (40) sont agencées en fonction de la grandeur de leur diamètre.

10. Matériau filtrant selon l'une des revendications 1 à 9, **caractérisé par le fait que** l'agent de réticulation, pour relier les fibres polymères (40) entre elles et/ou avec au moins une couche de matériau (20), est une liaison chimique au moins bifonctionnelle, de préférence une résine phénolique, une résine mélamine-formaldéhyde, une résine urée-formaldéhyde, une résine époxy, une résine acrylique, une substance de résistance à l'humidité ou un mélange de ces substances susnommées.

11. Matériau filtrant selon l'une des revendications 1 à 10, **caractérisé par le fait que** le catalyseur est un acide de Lewis ou de Brönsted, une base de Lewis ou de Brönsted, ou bien un composé avec des propriétés d'oxydation ou d'amorçage radicalaire.

12. Matériau filtrant selon l'une des revendications 1 à 11, **caractérisé par le fait que** le catalyseur est de la chaleur, un ultrason, un rayon électromagnétique, et de préférence de la lumière IR ou UV ou un rayon électronique.

13. Matériau filtrant selon l'une des revendications 1 à 12, **caractérisé par le fait qu'**il a été prévu au moins une autre couche de matériau (20), qui est ou qui forme une couche de recouvrement, une couche de fibres d'appui ou une autre couche de filtrage, la couche de structure fine (30) étant adjacente à au moins une de ces couches, en amont et/ou en aval du flux.

14. Matériau filtrant selon l'une des revendications 1 à 13, **caractérisé par le fait que** le volume macroscopique mesurable de la couche de matériau (20) reste inchangé après application des fibres polymères (40) de la couche de structure fine (30).

15. Matériau filtrant selon l'une des revendications 1 à 14, **caractérisé par le fait qu'**au moins une couche de matériau (20) est constituée de fibres organiques et/ou inorganiques ou d'une liaison composite de celles-ci, notamment de cellulose, de fibres synthétiques ou de microfibres de verre.

16. Matériau filtrant selon l'une des revendications 1 à 15, **caractérisé par le fait qu'**au moins une couche de matériau (20) est imprégnée et solidifiée ou solidifiable, par exemple avec de la résine phénolique.

17. Matériau filtrant selon l'une des revendications 1 à 16, **caractérisé par le fait qu'**au moins une couche de matériau (20) est un matériau de base (25) à grandes pores avec un faible effet de filtration, ou bien une couche de jonction à pores ouvertes (60) sans propriétés de filtration.

18. Matériau filtrant selon l'une des revendications 1 à 17, **caractérisé par le fait qu'**au moins une couche de matériau (20) est un matériau à électrets.

19. Matériau filtrant selon l'une des revendications 1 à 18, **caractérisé par le fait qu'**au moins une couche de matériau (20) est hydrophobe en surface, par alcylation ou silylation (silanisation) par exemple.

20. Matériau filtrant selon l'une des revendications 1 à 19, **caractérisé par le fait qu'**au moins une couche de matériau (20) contient une ou plusieurs substances ignifuges et/ou des colorants fluorescents.

21. Matériau filtrant selon l'une des revendications 1 à 20, **caractérisé par le fait qu'**au moins une couche de matériau (20) est pourvue de ligands d'affinité.

22. Filtre particulaire ou filtre moléculaire avec au moins un matériau filtrant (10) selon la revendication 1.

23. Procédé de fabrication d'un matériau filtrant (10) utilisable dans des dispositifs perméables, où au moins un polymère en état fondu ou soluté dans un solvant polaire ou non polaire est filé, au moyen d'une filière dans un champ électrique, en fibres polymères (40), lesquelles sont déposées sous forme de couche de structure fine (30) sur une couche de matériau (20), les fibres polymères (40) ayant un diamètre moyen des fibres plus petit et/ou égal à 1 µm et des interstices étant formés entre les fibres polymères (40),
a) un agent de réticulation étant ajouté au polymère fondu ou à la solution polymère,
b) et les fibres polymères (40) déposées sur la couche de matériau (20) réticulant avec l'agent de réticulation par l'intermédiaire d'un catalyseur ou de rayons électromagnétiques ou électroniques, et/ou étant réticulées,
**caractérisé par le fait que** la couche de matériau (20) est imprégnée avec un agent d'imprégnation et que la couche de structure fine (30) est entièrement conservée jusqu'à 180 °C.

24. Procédé selon la revendication 23, **caractérisé par** la fabrication d'une couche de structure fine (30) stable jusqu'à une température de 200 °C.

25. Procédé selon la revendication 23 ou 24, **caractérisé par** la formation d'un matériau filtrant (10) insoluble dans l'eau.

26. Procédé selon l'une des revendications 23 à 25, **caractérisé par le fait que** les fibres polymères (40) de la couche de structure fine (30) sont fabriquées par électrofilage à partir d'une solution polaire, de préférence aqueuse.

27. Procédé selon l'une des revendications 23 à 26, **caractérisé par le fait qu'**une pile de couches consistant en au moins une couche de matériau (20) ainsi qu'en au moins une couche de structure fine (30) est mise en contact avec des catalyseurs basiques ou acides ou avec des rayons électromagnétiques ou électroniques.

28. Procédé selon l'une des revendications 23 à 27, **caractérisé par le fait que**
a) les fibres polymères (40) sont déposées sur une couche de matériau non imprégné (20), et
b) que le matériau filtrant non imprégné (10) ainsi fabriqué est traité en bloc avec un agent d'imprégnation
c) et ensuite solidifié dans son ensemble.
